# EUROPEAN PATENT SPECIFICATION

(11) **EP 3 839 298 B1**
(45) Date of publication and mention of the grant of the patent: **18.11.2026**
(21) Application number: 19850159.5
(22) Date of filing: 17.06.2019
(51) Int. Cl.: F16J 15/12, F16L 23/18

(54) **SPIRAL WOUND GASKET**
SPIRALFÖRMIG GEWICKELTE DICHTUNG
JOINT SPIRALÉ

(30) Priority: 16.08.2018 JP 2018153178
(43) Date of publication of application: 23.06.2021
(73) Proprietor: PILLAR Corporation, Osaka-shi, Osaka 550-0013 (JP)
(72) Inventor: FUJIWARA, Masaru, Osaka-shi, Osaka 550-0013 (JP); HORIUCHI, Tomoaki, Osaka-shi, Osaka 550-0013 (JP); HINA, Jun, Osaka-shi, Osaka 550-0013 (JP); ARAKAWA, Kohei, Osaka-shi, Osaka 550-0013 (JP); MATSUDA, Yuta, Osaka-shi, Osaka 550-0013 (JP); SAWAMOTO, Naoyuki, Osaka-shi, Osaka 550-0013 (JP)
(74) Representative: Meissner Bolte Partnerschaft mbB
(86) International application number: PCT/JP2019/023924
(87) International publication number: WO 2020/035992

(56) References cited:
- WO-A1-2013/177392
- JP-A- 2001 032 942
- JP-A- 2012 017 790
- JP-A- H10 220 583
- JP-A- H11 280 908
- US-A1- 2013 313 788

## Description

### TECHNICAL FIELD

The present invention relates to a spiral wound gasket.

### BACKGROUND ART

A spiral wound gasket for preventing fluid leakage is provided between a pair of seal surfaces facing each other, for example, at a connection point between pipes forming a flow passage for a fluid such as a gas or a liquid. The spiral wound gasket is configured by spirally winding a band plate-shaped hoop material composed of a metal material and a band plate-shaped filler material composed of a soft material such as expanded graphite while overlapping the hoop material and the filler material with each other, and is mounted and used between both seal surfaces.

In this case, these seal surfaces are tightened by bolts or the like so as to come closer to each other to apply a predetermined tightening pressure to the spiral wound gasket from both end surfaces in the axial direction thereof, whereby sealing is ensured between both seal surfaces (see, for example, PATENT LITERATURE 1 and PATENT LITERATURE 2).

### CITATION LIST

### PATENT LITERATURE

PATENT LITERATURE 1: Japanese Laid-Open Patent Publication JP H11-257494 A
PATENT LITERATURE 2: Japanese Laid-Open Patent publication JP H10-220583 A

### SUMMARY OF THE INVENTION

### TECHNICAL PROBLEM

If the tightening positions of both seal surfaces by the bolts or the like are located on one side in the radial direction of the spiral wound gasket, both seal surfaces may be closest to each other at the position corresponding to the one side in the radial direction of the spiral wound gasket, and may also be bent so as to be most separated from each other at the position corresponding to the other side in the radial direction of the spiral wound gasket.

If such bending occurs, there is a problem that a gap occurs between the spiral wound gasket and each seal surface at the other side in the radial direction and thus the spiral wound gasket cannot exert appropriate sealing performance.

The present invention has been made in view of such a problem, and an object of the present invention is to provide a spiral wound gasket that can maintain appropriate sealing performance even when seal surfaces are bent due to tightening of the seal surfaces.

### [SOLUTION TO PROBLEM]

A spiral wound gasket according to the present invention is a spiral wound gasket configured by spirally winding a band plate-shaped hoop material composed of a metal material and a band plate-shaped filler material composed of a soft material while overlapping the hoop material and the filler material with each other in a plate thickness direction, wherein a density of the wound filler material gradually decreases from one side in a radial direction of the spiral wound gasket toward another side in the radial direction.

According to the present invention, since the density of the filler material, which is composed of a soft material, gradually decreases from the one side in the radial direction of the spiral wound gasket toward the other side in the radial direction, the elastic restoring force of the spiral wound gasket gradually increases from the one side in the radial direction toward the other side in the radial direction due to the filler material.

Accordingly, when the spiral wound gasket is mounted between a pair of seal surfaces, if tightening positions of both seal surfaces by bolts or the like are located on the one side in the radial direction of the spiral wound gasket, both seal surfaces are bent so as to be most separated from each other at a position corresponding to the other side in the radial direction of the spiral wound gasket, but the other side in the radial direction of the spiral wound gasket is restored so as to follow the bending of both seal surfaces by the large elastic restoring force thereof.

As a result, a gap does not occur between the other side in the radial direction of the spiral wound gasket and each seal surface, and thus the spiral wound gasket can maintain appropriate sealing performance.

Preferably, the hoop material is formed by being bent in a substantially V cross-sectional shape, and a bending angle of the hoop material gradually increases from the one side in the radial direction of the spiral wound gasket toward the other side in the radial direction.

In this case, since the bending angle of the hoop material, which is composed of a metal material and formed by being bent in a substantially V cross-sectional shape, gradually increases from the one side in the radial direction of the spiral wound gasket toward the other side in the radial direction, it is easy for the hoop material to be gradually bent and restored from the one side in the radial direction of the spiral wound gasket toward the other side in the radial direction.

Accordingly, the elastic restoring force of the spiral wound gasket can be further gradually increased from the one side in the radial direction toward the other side in the radial direction by the cooperation of the hoop material and the filler material.

### ADVANTAGEOUS EFFECTS OF INVENTION

The spiral wound gasket according to the present invention can maintain appropriate sealing performance even when both seal surfaces are bent due to tightening of the seal surfaces.

### BRIEF DESCRIPTION OF DRAWINGS

- FIG. 1: is a cross-sectional view showing a spiral wound gasket according to a first embodiment of the present invention.
- FIG. 2: is an explanatory diagram showing one example of a method for manufacturing the spiral wound gasket.
- FIG. 3A: is an explanatory diagram showing a state where the density of a filler material is continuously changed in a longitudinal direction.
- FIG. 3B: is an explanatory diagram showing a state where the density of the filler material is changed stepwise every turn of winding.
- FIG. 3C: is an explanatory diagram showing a state where the density of the filler material is changed such that the rate of change thereof is higher on the side on which the density is higher.
- FIG. 3D: is an explanatory diagram showing a state where the density of the filler material is changed such that the rate of change thereof is lower on the side on which the density is higher.
- FIG. 4: is a cross-sectional view showing the spiral wound gasket in a state where seal surfaces are bent.
- FIG. 5: is a cross-sectional view showing a spiral wound gasket according to a second embodiment of the present invention.
- FIG. 6: is a cross-sectional view showing the spiral wound gasket according to the second embodiment in a state where seal surfaces are bent.
- FIG. 7: is a cross-sectional view showing the spiral wound gasket according to the first embodiment in a state where the seal surfaces are bent.

### DESCRIPTION OF EMBODIMENTS

Hereinafter, embodiments of the spiral wound gasket according to the present invention will be described with reference to the drawings.

### First Embodiment

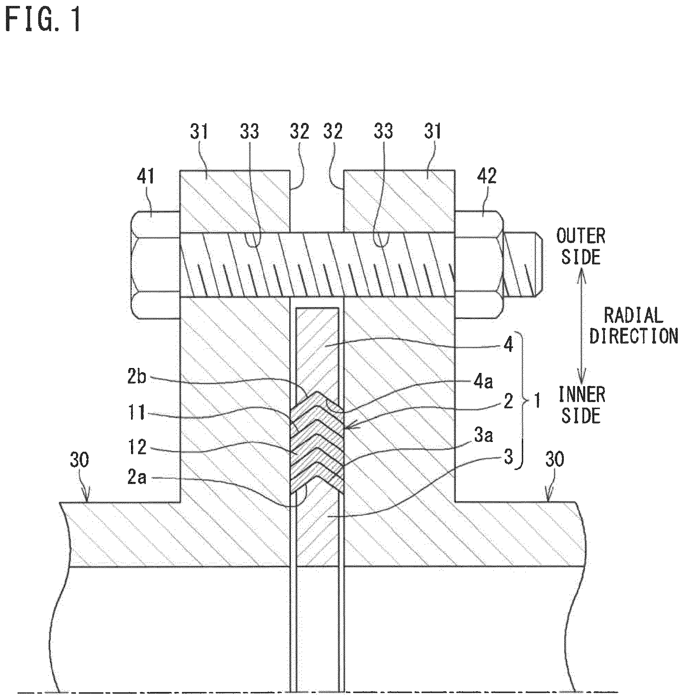

FIG. 1 is a cross-sectional view showing a spiral wound gasket according to a first embodiment of the present invention. In FIG. 1, for example, at a connection point between pipes 30, the spiral wound gasket 1 is mounted between seal surfaces 32, facing each other, of flanges 31 of both pipes 30.

On the outer peripheral side of each flange 31, through holes 33 penetrating in the axial direction are formed at a plurality of locations in the circumferential direction (only one location is shown in the drawing). Bolts 41 are inserted into these through holes 33, and nuts 42 are screwed to the inserted bolts 41. Both seal surfaces 32 are tightened by the bolts 41 and the nuts 42 so as to come closer to each other to apply a predetermined tightening pressure to a gasket body 2 (described later) from both sides in the axial direction (both the right side and the left side in FIG. 1), whereby sealing is ensured between both seal surfaces 32.

The spiral wound gasket 1 according to the present embodiment includes the annular gasket body 2, an inner ring 3 as a reinforcing ring member mounted on the inner peripheral side of the gasket body 2, and an outer ring 4 as a reinforcing ring member mounted on the outer peripheral side of the gasket body 2. The spiral wound gasket 1 does not have to include one of or both the inner ring 3 and the outer ring 4.

The inner ring 3 is formed in an annular shape using a metal material such as a cold-rolled steel plate or a stainless steel plate. On the outer peripheral surface of the inner ring 3, a mountain-shaped bulge portion 3a is formed over the entire circumference so as to project outward in the radial direction.

Similar to the inner ring 3, the outer ring 4 is formed in an annular shape using a metal material such as a cold-rolled steel plate or a stainless steel plate. On the inner peripheral surface of the outer ring 4, a V-shaped groove 4a is formed over the entire circumference.

The gasket body 2 is configured by spirally winding a band plate-shaped hoop material 11 composed of a metal material (stainless steel, or the like) and a band plate-shaped filler material 12 composed of a soft material (expanded graphite, fluororesin, or the like) and having a width equal to or slightly larger than that of the hoop material 11, while overlapping the hoop material 11 and the filler material 12 with each other in the plate thickness direction.

The hoop material 11 is formed by being bent in a substantially V cross-sectional shape such that the inner side thereof in the radial direction is open (such that the bent portion is located on the outer side in the radial direction), and the filler material 12 is also formed in a substantially V cross-sectional shape along the cross-sectional shape of the hoop material 11. The filler material 12 has a uniform density over the entire length in the longitudinal direction thereof before being wound.

Accordingly, on the inner peripheral surface of the gasket body 2, a V-shaped groove 2a is formed over the entire circumference, and the bulge portion 3a of the inner ring 3 is engaged with the V-shaped groove 2a. In addition, on the outer peripheral surface of the gasket body 2, a mountain-shaped bulge portion 2b is formed over the entire circumference so as to project outward in the radial direction, and the bulge portion 2b is engaged with the V-shaped groove 4a of the outer ring 4.

In the gasket body 2, an empty winding portion in which only the hoop material 11 is wound may be formed on both or one of the inner peripheral side and the outer peripheral side thereof.

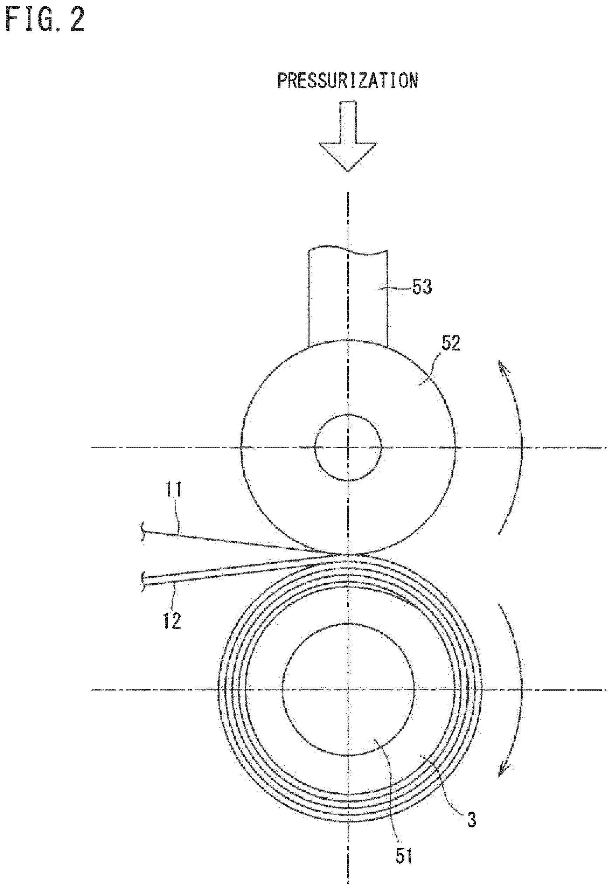

FIG. 2 is an explanatory diagram showing one example of a method for manufacturing the spiral wound gasket 1. As shown in FIG. 2, when manufacturing the spiral wound gasket 1, first, the inner ring 3 is mounted on the outer periphery of a rotation shaft 51 that is rotatable clockwise in the drawing. Then, the band plate-shaped hoop material 11 and the band plate-shaped filler material 12 are wound on the outer periphery of the inner ring 3 so as to be overlapped with each other while the inner ring 3 is rotated with the rotation shaft 51. FIG. 2 shows a state during the winding.

During the winding of the hoop material 11 and the filler material 12, for example, at the overlapping position of the hoop material 11 and the filler material 12 (at the 12 o'clock position in FIG. 2), the hoop material 11 and the filler material 12 are pressurized toward the center of the rotation shaft 51 by a pressure roll 52. The pressure roll 52 is attached to an end portion of a pressure arm 53 so as to be rotatable counterclockwise in the drawing, and is configured such that the outer peripheral surface of the pressure roll 52 rotates while being constantly in contact with the outer peripheral surface of the hoop material 11 during winding at the overlapping position. Therefore, by pressing the pressure arm 53 toward the lower side in the drawing, the pressure roll 52 pressurizes the hoop material 11 and the filler material 12 while rotating.

The pressurizing force of the pressure roll 52 is set such that the pressurizing force gradually increases as the winding of the hoop material 11 and the filler material 12 advances. By winding the hoop material 11 and the filler material 12 while changing the pressurizing force of the pressure roll 52 as described above, the density of the filler material 12, which is composed of a soft material, gradually increases from the inner side in the radial direction of the spiral wound gasket 1 toward the outer side in the radial direction.

In other words, the density of the wound filler material 12 gradually decreases from the outer side in the radial direction of the spiral wound gasket 1 toward the inner side in the radial direction.

The filler material 12 has a uniform density over the entire length in the longitudinal direction thereof before being wound, and the density of the filler material 12 is changed by changing the pressurizing force of the pressure roll 52 in the middle of winding of the filler material 12 during the manufacture of the spiral wound gasket 1. However, the density may be changed by another method.

For example, the density of the band plate-shaped filler material 12 before being wound may be gradually decreased from one end in the longitudinal direction thereof toward the other end in the longitudinal direction thereof in advance, and the filler material 12 may be wound from the other end in the longitudinal direction thereof together with the hoop material 11, thereby changing the density of the filler material 12.

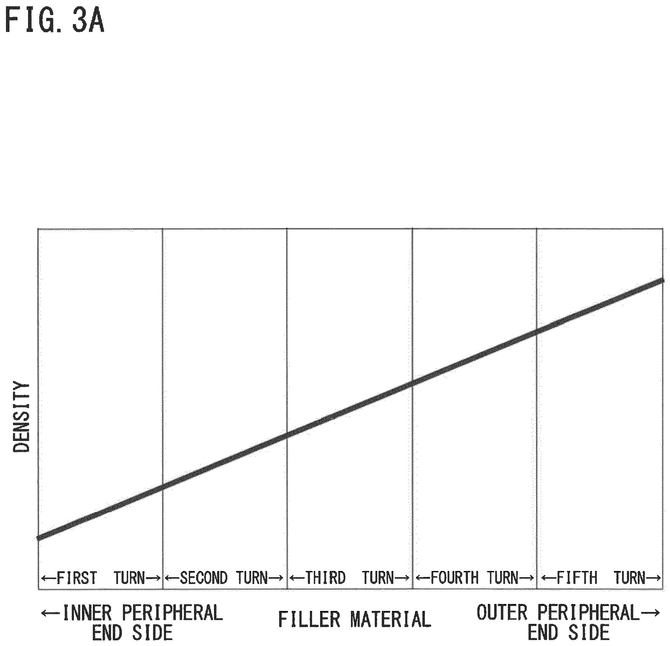

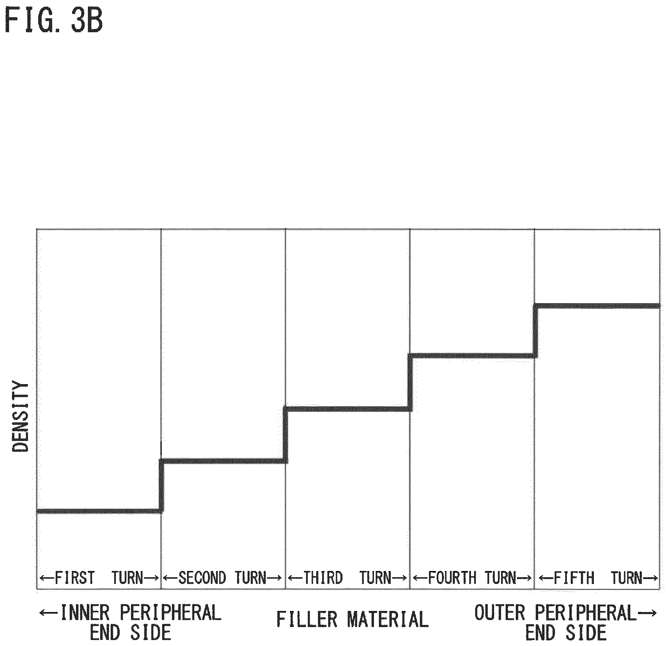

The density of the filler material 12 may be continuously changed in the longitudinal direction of the filler material 12 as shown in FIG. 3A, or may be changed stepwise every turn of winding (for example, every one turn of winding) as shown in FIG. 3B. However, the density of the filler material 12 is preferably changed stepwise every turn as in the latter, since the surface pressure when the flanges 31 on which the spiral wound gasket 1 is mounted are tightened becomes substantially uniform in the circumferential direction, thereby stabilizing the sealing.

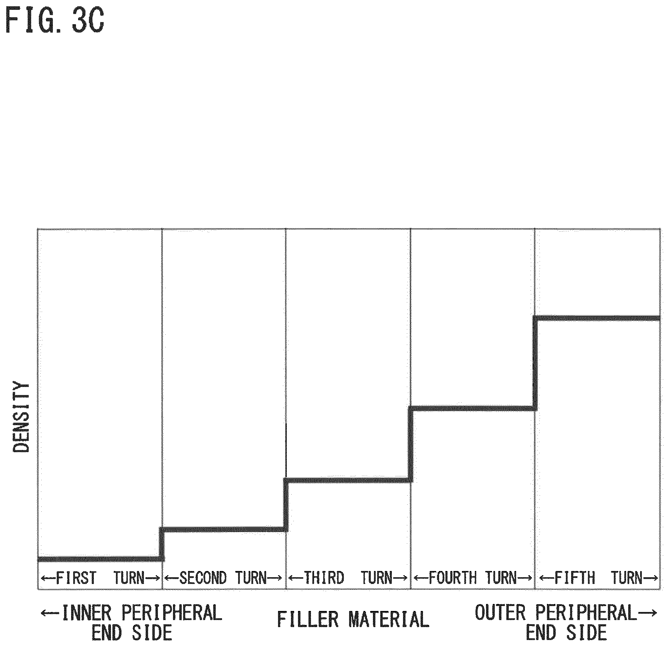

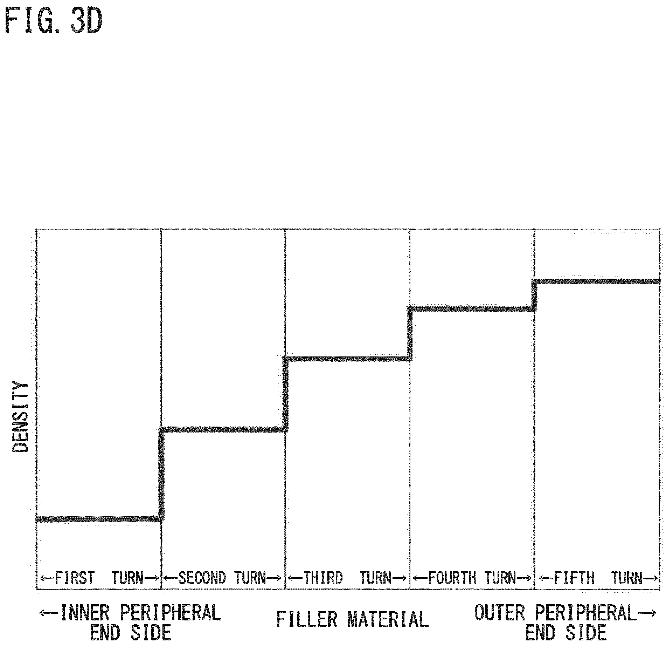

In addition, the density of the filler material 12 may be changed at a constant rate of change in the longitudinal direction of the filler material 12 as shown in FIG. 3A and FIG. 3B, may be changed such that the rate of change is higher on the side on which the density is higher as shown in FIG. 3C, or may be changed such that the rate of change is lower on the side on which the density is higher as shown in FIG. 3D.

In the spiral wound gasket 1 according to the first embodiment described above, since the density of the filler material 12, which is composed of a soft material, gradually decreases from the outer side in the radial direction of the spiral wound gasket 1 toward the inner side in the radial direction, the elastic restoring force of the spiral wound gasket 1 gradually increases from the outer side in the radial direction toward the inner side in the radial direction due to the filler material 12.

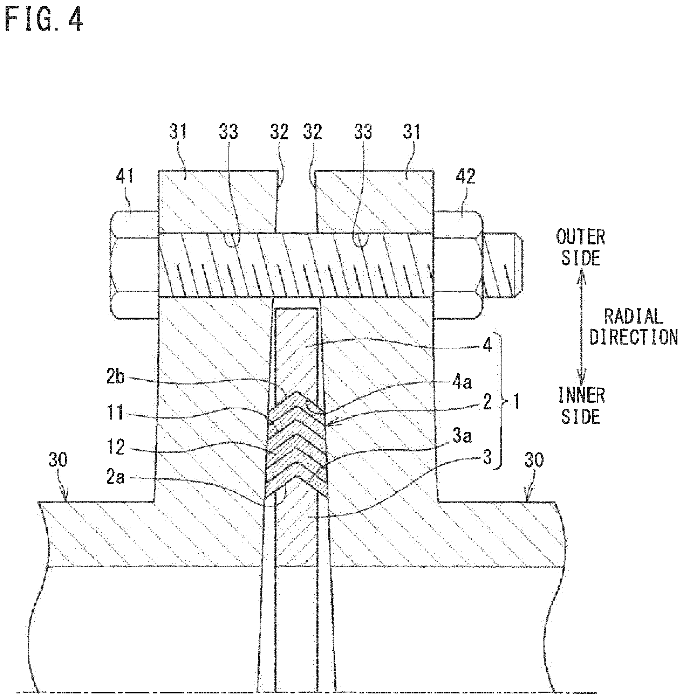

Accordingly, when the spiral wound gasket 1 is mounted between the pair of seal surfaces 32, since the tightening positions of both seal surfaces 32 by the bolts 41 and the nuts 42 are located on the outer side in the radial direction of the spiral wound gasket 1, both seal surfaces 32 are bent so as to be most separated from each other at the position corresponding to the inner side in the radial direction of the spiral wound gasket 1 as shown in FIG. 4, but the inner side in the radial direction of the spiral wound gasket 1 is restored so as to follow the bending of both seal surfaces 32 by the large elastic restoring force thereof.

As a result, a gap does not occur between the inner side in the radial direction of the spiral wound gasket 1 and each seal surface 32, and thus the spiral wound gasket 1 can maintain appropriate sealing performance.

### Second Embodiment

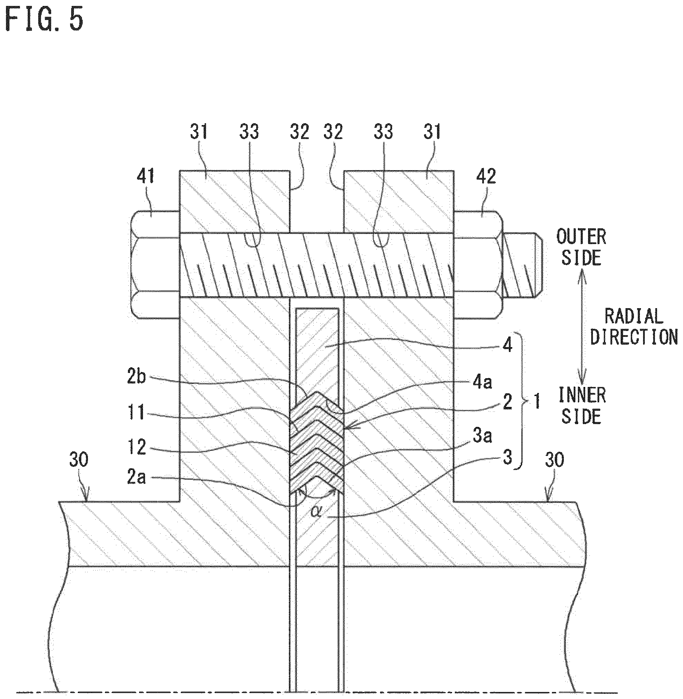

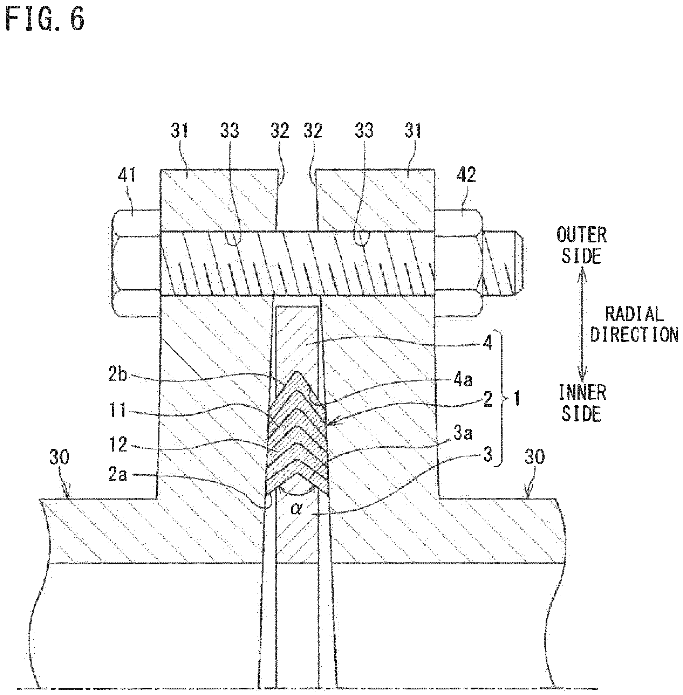

FIG. 5 is a cross-sectional view showing a spiral wound gasket 1 according to a second embodiment of the present invention. The spiral wound gasket 1 according to the present embodiment is different from the first embodiment in the cross-sectional shape of the hoop material 11 composed of a metal material. As shown in FIG. 5, similar to the first embodiment, the hoop material 11 of the present embodiment is formed by being bent in a substantially V cross-sectional shape such that the inner side thereof in the radial direction is open (such that the bent portion is located on the outer side in the radial direction), and a bending angle α thereof gradually increases from the outer side in the radial direction of the spiral wound gasket 1 toward the inner side in the radial direction (see FIG. 6).

In the case where both seal surfaces 32 are not bent as shown in FIG. 5, that is, in the case where the gap between both seal surfaces 32 is uniform over the entirety thereof in the radial direction of the spiral wound gasket 1, the hoop material 11 is deformed so as to be bent such that the bending angle α is constant over the entirety thereof in the radial direction.

The other configuration of the present embodiment is the same as that of the first embodiment, and the description thereof is omitted.

In the spiral wound gasket 1 according to the second embodiment, since the bending angle α of the hoop material 11, which is composed of a metal material and formed by being bent in a substantially V cross-sectional shape, gradually increases from the outer side in the radial direction of the spiral wound gasket 1 toward the inner side in the radial direction, it is easy for the hoop material 11 to be gradually bent and restored from the outer side in the radial direction of the spiral wound gasket 1 toward the inner side in the radial direction.

Accordingly, the elastic restoring force of the spiral wound gasket 1 can be further gradually increased from the outer side in the radial direction toward the inner side in the radial direction by the cooperation of the hoop material 11 and the filler material 12.

Therefore, as shown in FIG. 6, when both seal surfaces 32 are bent so as to be most separated from each other at the position corresponding to the inner side in the radial direction of the spiral wound gasket 1 (when the gap between both seal surfaces 32 is gradually increased from the outer side in the radial direction of the spiral wound gasket 1 toward the inner side in the radial direction), the inner side in the radial direction of the spiral wound gasket 1 is restored so as to follow the bending of both seal surfaces 32 by the large elastic restoring force thereof.

As a result, a gap does not occur between the inner side in the radial direction of the spiral wound gasket 1 and each seal surface 32, and thus the spiral wound gasket 1 can maintain further appropriate sealing performance.

### Others

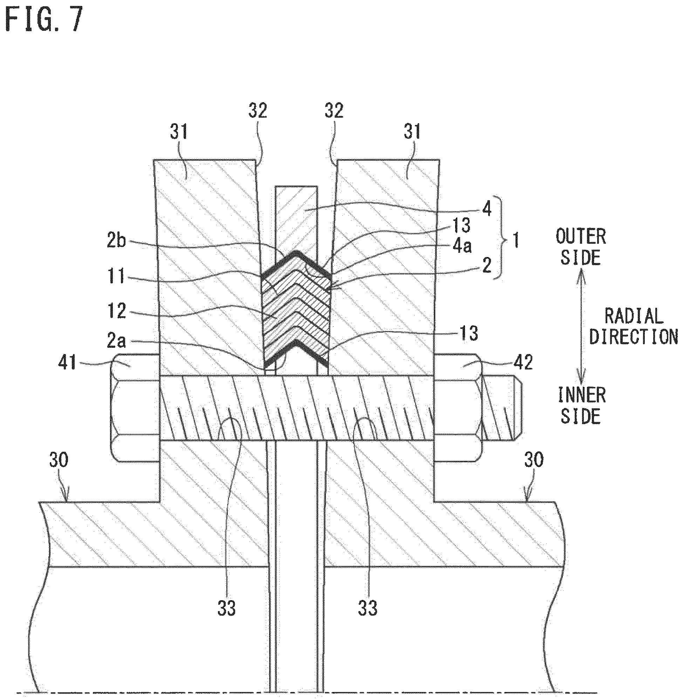

In the first and second embodiments, the case where the tightening positions of both seal surfaces 32 of the flanges 31 are located on the outer side in the radial direction has been described. However, for example, the spiral wound gasket according to the present invention can also be applied to the case where the tightening positions are located on the inner side in the radial direction as shown in FIG. 7.

Specifically, in the case where the tightening positions are located on the inner side in the radial direction, the density of the filler material 12 may be gradually decreased from the inner side in the radial direction of the spiral wound gasket 1 toward the outer side in the radial direction in the spiral wound gasket 1 in which an empty winding portion 13 in which only the hoop material 11 is wound is formed on the inner peripheral side and the outer peripheral side of the gasket body 2 and which does not have an inner ring.

As the method for gradually decreasing the density of the filler material 12 from the inner side in the radial direction of the spiral wound gasket 1 toward the outer side in the radial direction, the pressurizing force of the pressure roll 52 may be gradually decreased as winding of the hoop material 11 advances, or the density of the filler material 12 may be gradually increased from one end in the longitudinal direction thereof toward the other end in the longitudinal direction thereof in advance, and the filler material 12 may be wound from the other end in the longitudinal direction thereof together with the hoop material 11.

In this case, the elastic restoring force of the spiral wound gasket 1 gradually increases from the inner side in the radial direction toward the outer side in the radial direction due to the filler material 12. Accordingly, since the tightening positions of both seal surfaces 32 are located on the inner side in the radial direction of the spiral wound gasket 1, both seal surfaces 32 are bent so as to be most separated from each other at the position corresponding to the outer side in the radial direction of the spiral wound gasket 1, but the outer side in the radial direction of the spiral wound gasket 1 is restored so as to follow the bending of both seal surfaces 32 by the large elastic restoring force thereof.

As a result, a gap does not occur between the outer side in the radial direction of the spiral wound gasket 1 and each seal surface 32, and thus the spiral wound gasket 1 can maintain appropriate sealing performance.

In the case where the density of the filler material 12 is gradually decreased from the inner side in the radial direction of the spiral wound gasket 1 toward the outer side in the radial direction as described above, the bending angle α of the hoop material 11 of the second embodiment may be gradually increased from the inner side in the radial direction of the spiral wound gasket 1 toward the outer side in the radial direction.

In this case, the elastic restoring force of the spiral wound gasket 1 is further gradually increased from the inner side in the radial direction toward the outer side in the radial direction by the cooperation of the hoop material 11 and the filler material 12.

Accordingly, since the tightening positions of both seal surfaces 32 are located on the inner side in the radial direction of the spiral wound gasket 1, both seal surfaces 32 are bent so as to be most separated from each other at the position corresponding to the outer side in the radial direction of the spiral wound gasket 1, but the outer side in the radial direction of the spiral wound gasket 1 is restored so as to follow the bending of both seal surfaces 32 by the large elastic restoring force thereof. As a result, a gap does not occur between the outer side in the radial direction of the spiral wound gasket 1 and each seal surface 32, and thus the spiral wound gasket 1 can maintain appropriate sealing performance.

In the first and second embodiments, the example in which the hoop material 11 is formed by being bent in a substantially V cross-sectional shape such that the inner side thereof in the radial direction is open (such that the bent portion is located on the outer side in the radial direction), has been described.

However, the hoop material 11 may be formed by being bent in a substantially V cross-sectional shape such that the outer side thereof in the radial direction is open (such that the bent portion is located on the inner side in the radial direction), or may be formed by being bent in a substantially W cross-sectional shape (there are three bent portions).

The embodiments disclosed herein are merely illustrative in all aspects and should be considered not restrictive. The scope of the present invention is defined by the scope of the claims.

### LIST OF REFERENCE SIGNS

- 1: spiral wound gasket
- 11: hoop material
- 12: filler material
- α: bending angle

## Claims

1. A spiral wound gasket (1) configured by spirally winding a band plate-shaped hoop material (11) composed of a metal material and a band plate-shaped filler material (12) composed of a soft material while overlapping the hoop material (11) and the filler material (12) with each other, **characterized in that** a density of the wound filler material (12) gradually decreases from one side in a radial direction of the spiral wound gasket (1) toward another side in the radial direction.

2. The spiral wound gasket (1) according to claim 1,
wherein the hoop material (11) is formed by being bent in a substantially V cross-sectional shape, and
wherein a bending angle (α) of the hoop material (11) gradually increases from the one side in the radial direction of the spiral wound gasket (1) toward the other side in the radial direction.

## Patentansprüche

1. Spiralförmig gewickelte Dichtung (1), die konfiguriert ist durch spiralförmiges Wickeln von
- einem Band aus einem plattenförmigen Ringmaterial (11), das aus einem Metallmaterial zusammengesetzt ist, und
- einem Band aus einem plattenförmigen Füllmaterial (12), das aus einem weichen Material zusammengesetzt ist,
wobei das Ringmaterial (11) und das Füllmaterials (12) einander überlappen,
**dadurch gekennzeichnet,**
**dass** eine Dichte des gewickelten Füllmaterials (12) von der einen Seite in einer radialen Richtung der spiralförmig gewickelten Dichtung (1) zu einer anderen Seite in der radialen Richtung hin allmählich abnimmt.

2. Spiralförmig gewickelte Dichtung (1) nach Anspruch 1,
wobei das Ringmaterial (11) durch Biegen in eine im Wesentlichen V-förmige Querschnittsform gebildet ist, und
wobei ein Biegewinkel (α) des Ringmaterials (11) von der einen Seite in der radialen Richtung der spiralförmig gewickelten Dichtung (1) zu der anderen Seite in der radialen Richtung hin allmählich zunimmt.

## Revendications

1. Joint spiralé (1) configuré en enroulant en spirale un matériau de cerceau (11) en forme de bande plate, composé d'un matériau métallique, et un matériau de remplissage (12) en forme de bande plate, composé d'un matériau souple, en superposant le matériau de cerceau (11) et le matériau de remplissage (12), **caractérisé en ce que**
la densité du matériau de remplissage enroulé (12) diminue progressivement d'un côté dans une direction radiale du joint spiralé (1) vers un autre côté dans la direction radiale.

2. Joint spiralé (1) selon la revendication 1,
dans lequel le matériau de cerceau (11) est formé en étant plié en une forme de section transversale sensiblement en V, et
dans lequel un angle de pliage (α) du matériau de cerceau (11) augmente progressivement d'un côté dans la direction radiale du joint spiralé (1) vers l'autre côté dans la direction radiale.
